# EUROPÄISCHE PATENTSCHRIFT

(11) **EP 1 034 062 B1**
(45) Veröffentlichungstag und Bekanntmachung des Hinweises auf die Patenterteilung: **08.12.2004**
(21) Anmeldenummer: 98955488.6
(22) Anmeldetag: 20.10.1998
(51) Int. Cl.: B23K 26/06

(54) **VORRICHTUNG ZUR FORMGEBUNG VON OBJEKTEN**
OBJECT FIGURING DEVICE
DISPOSITIF DE FA ONNAGE D'OBJETS

(30) Priorität: 22.10.1997 DE 19746483
(43) Veröffentlichungstag der Anmeldung: 13.09.2000
(73) Patentinhaber: Carl Zeiss Meditec AG, 07745 Jena (DE)
(72) Erfinder: GODER, Claus, D-90491 Nürnberg (DE); HOLLERBACH, Thomas, D-07745 Jena (DE); KÜHNERT, Jürgen, D-07747 Jena (DE); SCHRÖDER, Eckhard, D-90542 Eckental (DE)
(74) Vertreter: Niestroy, Manfred
(86) Internationale Anmeldenummer: PCT/EP1998/006626
(87) Internationale Veröffentlichungsnummer: WO 1999/020429

(56) Entgegenhaltungen:
- EP-A- 0 274 205
- EP-A- 0 296 497
- EP-A- 0 346 116
- WO-A-97/43078
- DE-A- 4 141 890
- DE-A- 19 514 679
- DE-A- 19 703 661
- US-A- 5 091 626
- SEILER, TH. ET AL. : "Fundamental mode photoablation of cornea for myopic correction" LASER AND LIGHT IN OPHTALMALOGY, Bd. 5, Nr. 4, Oktober 1993, Seite 199-203 XP002093505 Amsterdam (NL)/New York (US) in der Anmeldung erwähnt

## Beschreibung

### Gebiet der Erfindung

Die Erfindung bezieht sich auf eine Vorrichtung zur Formgebung von Objekten durch Materialabtragung von deren Oberfläche mit einem gepulsten Laserstrahl und einer Ablenkeinrichtung, durch die der Laserstrahl über die Objektoberfläche geführt wird. Sie ist vorzugsweise zur Formgebung von natürlichen optischen Linsen aus biologischer Substanz oder von künstlichen optischen Linsen geeignet.

### Stand der Technik

Im Stand der Technik sind verschiedene Vorrichtungen und Verfahren bekannt, die mit Hilfe von Laserstrahlung zum Abtragen von Material von einer Objektoberfläche und damit zur Formung dieser Objekte geeignet sind, wie beispielsweise zur Ablation von Gewebe im Bereich der Hornhaut des Auges bzw. zum ophthalmologischen Formen von Augenlinsen. Siehe z.B. EP-A-0 274 205.

Die ersten Veröffentlichungen dazu, eine Fehlsichtigkeit des menschlichen Auges durch Abflachung oder Aufsteilung der Hornhaut zu beeinflussen, stammen etwa aus den Jahren 1983 bis 1985. So ist mehr Hornhautgewebe im Zentrum der Augenlinse als vergleichsweise in den peripheren Bereichen zu entfernen, um als Resultat eine Abflachung und damit eine Korrektur der Kurzsichtigkeit des Auges zu erzielen. Wird dagegen mehr Hornhautgewebe an der Peripherie als im Zentrum abgetragen, wird die Krümmung der Hornhaut verstärkt und somit der Weitsichtigkeit des Auges entgegenwirkt.

Daraus folgt, daß in Abhängigkeit von der Indikation von einzelnen Oberflächenabschnitten der Hornhaut bzw. der Cornea unterschiedliche Mengen an biologischer Substanz abzutragen sind. Dazu kommt, daß je nach Ausmaß der erforderlichen Korrektur und je nach Bearbeitungsfortschritt die Menge der je Zeiteinheit abzutragenden Sustanz unterschiedlich sein kann; so ist beispielsweise im ersten Bearbeitungsstadium eine größere Menge abzutragen als im abschließenden Stadium der Feinbearbeitung, in dem es vor allem darauf ankommt, glatte Oberflächen auf der korrigierten Krümmung zu erzielen.

Ein wesentlicher Faktor für die Abtragungsmenge je Zeiteinheit und damit auch für eine veränderbare definierte Abtragungrate ist einmal die Intensität der Laserstrahlung an sich, d.h. die mit der Strahlung in das abzutragende Material eingebrachte Energie, zum anderen aber auch die Intensitätsverteilung im Querschnitt der Laserstrahlung bzw. im Spot, der je Laserimpuls auf die Objektoberfläche gesetzt wird. Denn ist die Intensitätsverteilung im Strahlungsquerschnitt unterschiedlich, erfolgt auch ein unterschiedlicher Mengenabtrag über die Querschnittsfläche.

Ein unterschiedlicher Mengenabtrag über die Querschnittsfläche ist dann wünschenswert, wenn beispielsweise an den Rändern des Querschnittes bzw. Spots weniger Material abladiert werden soll als in einem zentralen Strahlungsbereich, weil so die Ausbildung steiler Randbereiche im verbleibenden Material vermieden werden kann.

Die von einem Excimerlaser ausgehende Strahlung weist einen rechteckigen Querschnitt auf, in welchem in Richtung der größeren Querschnittslänge eine, von Intensitätsschwankungen abgesehen, gleichmäßigere Intensitätsverteilung gegeben ist als in der senkrecht dazu orientierten Richtung der kürzeren Querschnittsseite, wo die Intensität von der Strahlungsmitte aus zu den Rändern hin glocken- bzw. gaußförmig abfällt. Soll die Strahlung in einer Querschnittsrichtung oder auch innerhalb des gesamten Querschnittes homogenisiert werden, sind aufwendige Maßnahmen erforderlich. Bekannt ist beispielsweise die Homogenisierung durch Streuplatten mit nachgeschalteten Blenden und durch die Verwendung abrasiver Blenden.

Vorrichtungen zum Homogenisieren der Strahlungsintensität insbesondere in Excimer-Laserstrahlung sind beispielsweise beschrieben in den Veröffentlichungen DE 42 20 705, JP 07027993, EP 0 232 037 und EP 0 100 242. Die hier dargestellten Anordnungen dienen dazu, die Strahlungsintensität über den gesamten Strahlungsquerschnitt möglichst gleichförmig zu verteilen. Eine über den gesamten Querschnitt gleichförmige Intensität bedeutet aber eine "topfartige" Intensitätsverteilung, also eine in den Randbereichen der Laserstrahlung sehr steil ansteigende bzw. steil abfallende Intensität. Wird eine derartige Laserstrahlung nach dem Spotscanning-Prinzip über die zu be-Randbereichen der Laserstrahlung sehr steil ansteigende bzw. steil abfallende Intensität. Wird eine derartige Laserstrahlung nach dem Spotscanning-Prinzip über die zu behandelnde Objektoberfläche geführt, hat die topfartige Intensitätsverteilung eine Stufenbildung des verbleibenden Materials in den Grenzbereichen von Spot zu Spot zur Folge. Solch stufenartige Unregelmäßigkeiten auf der Hornhaut führen zu störenden optischen Erscheinungen bei der Sinneswahrnehmung.

In der OS-DE 44 29 193 A1 ist eine weitere Vorrichtung zur Erzeugung einer querschnittshomogenisierten Laserstrahlung wie auch die Verwendung dieser Strahlung bei der Materialabtragung beschrieben. Hier wird eine von einem Festkörperlaser ausgehende gepulste Laserstrahlung durch eine optische Faser geführt und dabei modenhomogenisiert. Nachteiligerweise ist die hier beschriebene Anordnung nicht zum Spotscanning geeignet, d.h. es sind nur relativ große Oberflächenabschnitte (Spots) in ihrer Gesamtheit bearbeitbar.

Hinweise auf die ganzflächige Ablation der Cornea mit einem Festkörperlaser bei gaußförmiger Intensitätsverteilung im Strahlungsquerschnitt enthält die Veröffentlichung "Fundamental mode photoablation of the cornea for myoptic correction", T. Sailer und J. Wollensack, Laser and Light in Ophthalmology vol.5 no.4 pp 199-203, 1993. Die dort beschriebenen Verfahrensweise geht davon aus, daß ein solcher Laser eine räumlich homogene Strahlung im Grundmode TEM₀₀ abgibt. Allerdings steht im Grundmode TEM₀₀ nur ein Teil der abgestrahlten Energie zur Verfügung, die beispielsweise für die Hornhautablation nicht ausreicht.

### Beschreibung der Erfindung

Der Erfindung liegt die Aufgabe zugrunde, eine Vorrichtung der vorbeschriebenen Art so weiterzubilden, daß die Formgebung schnell und effektiv ausführbar ist und das Verbleiben störender Mikrostrukturen auf der Objektoberfläche vermieden wird.

Erfindungsgemäß wird die Aufgabe dadurch gelöst, daß eine optische Einrichtung zur Änderung der Verteilung der Strahlungsintensität innerhalb des Laserstrahlquerschnittes vorgesehen ist, die mindestens ein optisches Element mit einer diffraktiven und/oder refraktiven mikrooptisch wirksamen Struktur aufweist, wobei diese Struktur die Intensitätsverteilung im Laserstrahlquerschnitt derart beeinflußt, daß der Laserstrahl nach Durchgang durch das optische Element in mindestens einer Querschnittsrichtung eine glocken- oder gaußförmige oder glocken- oder gaußformähnliche Intensitätsverteilung aufweist.

Im Gegensatz zu dem nach dem Stand der Technik bekannten Aufbringen sich gegenseitig überlappender Spots mit topfartiger Verteilung der Strahlungsintensität auf die abzutragende Oberfläche besteht erfindungsgemäß der Vorteil, daß bei der Überlappung von Spots mit gaußähnlicher Intensitätsverteilung sehr schnell eine sehr glatte Gesamtoberfläche realisierbar ist. Auf der Oberfläche bleibt keine stufig steilen Struktur, eine Nachbearbeitung der Oberfläche ist deshalb nicht oder nur in begrenztem Maße erforderlich. Das hat zur Folge, daß die Bearbeitungszeit insbesondere bei der Korrektur von Krümmungen der Hornhaut mit Benutzung der erfindungsgemäßen Vorrichtung wesentlich verkürzt werden kann. Außerdem besteht gegenüber dem Stand der Technik der Vorteil, daß der Abtrag nicht nur über die gesamte Oberfläche möglich ist, sondern aufgrung des Scanning-Prinzips lokal begrenzt auch auf kleinen Abschnitten der Oberfläche vorgenommen werden kann.

In einer Ausgestaltung der Erfindung ist vorgesehen, daß das mindestens eine optische Element durch weitere optische Elemente ausgewechselt werden kann.

Das in der optischen Einrichtung enthaltene optische Element oder auch mehrere in der optischen Einrichtung vorgesehene, gegeneinander auswechselbare optische Elemente sind mit der mikrooptisch wirksamen Struktur versehen, die zur Beeinflußung der Intensitätsverteilung innerhalb der Laserstrahlung geeignet ist. Dabei ist die Struktur beispielsweise mit Elektronenstrahl- oder Photolithographieverfahren auf das optische Element aufgebracht, wodurch das optische Element ein mikrooptisch wirksames Höhenprofil, eine über seine Querschnittsfläche sich erstreckende Variation des Brechungsindex und/oder eine Variation der Absorption aufweist. Mit der Wahl des Strukturverlaufes wird die Reflexion und/oder Transmission der Lichtwellen gezielt beeinflußt. Die Strukturen können beispielsweise als streifenförmige, kreuzförmige, trichterförmige oder anderweitig geformte Vertiefung und/oder Erhebung auf einer Fläche des Elementes ausgebildet sein.

Das optische Element bzw. die optischen Elemente sind in der Regel aus Silizium, Glas oder Kunststoff gefertigt. Die optisch wirksame Oberfläche kann sphärisch, asphärisch, zylindrisch oder elliptisch geformt sein. Optische Elemente mit derartigen Strukturen besitzen eine hohe Wirksamkeit bei der Umverteilung der Strahlungsintensität innerhalb des Laserstrahles.

So kann ein optisches Element vorgesehen sein, das eine radialsymmetrische Intensitätsverteilung innerhalb des Laserstrahlquerschnittes erzeugt, bei der im Zentrum des Querschnittes ein Intensitätsmaximum und vom Zentrum zu den Randbereichen hin eine glocken- oder gaußförmig abfallende Intensität vorhanden ist.

Die erfindungsgemäße Anordnung ist anwendbar im Zusammenhang mit verschiedensten Lasersystemen bei Wellenlängen vom UV- bis in den IR-Bereich. Unabhängig von der vom Laser ausgehenden Strahlform und Intensitätsverteilung im Laserstrahl wird die für die Bearbeitung optimale Form und Verteilung erreicht. So wird durch das optische Element beispielsweise eine unrunde, etwa von einem Excimerlaser ausgehende Laserstrahlung mit inhomogener Intensitätsverteilung in eine runde Strahlung mit homogener Intensitätsverteilung transformiert, mit der schließlich eine optimale Abtragung von Material an der Objektoberfläche erfolgen kann.

So hat beispielsweise der Laserstrahl, wie er für die photorefraktive Keratektomie (PRK) oder das LASIK-Verfahren verwendet wird, einen rechteckigen Querschnitt von etwa 10mm x 30mm. In einem Schnitt parallel zur längeren Seite dieses Rechteckes ist das Intensitätsprofil der Laserstrahlung etwa trapezförmig ausgebildet mit Intensitätsschwankungen, die als "hot spots" bezeichnet werden. In Richtung der kleineren Seitenlänge betrachtet weist das Intensitätsprofil etwa Glocken- oder Gaußform auf. Durch die erfindungsgemäße Einordnung eines der optischen Elemente in den Laserstrahlengang nimmt das Intensitätsprofil in jeder Schnittrichtung durch die Strahlungsachse glocken- oder gaußförmig Gestaltung an.

Im Rahmen der Erfindung liegt eine Ausgestaltung, bei der vorgesehen ist, daß das optische Element eine radialsymmetrische Intensitätsverteilung innerhalb des Laserstrahlquerschnittes erzeugt, bei der in einer kreisrunden zentralen Querschnittsfläche eine etwa gleiche Intensität und von der zentralen Querschnittsfläche zu den Randbereichen der Laserstrahlung hin eine glocken- oder gaußförmig abfallende Intensität vorhanden ist.

Durch diese im Kernbereich der Laserstrahlung weitestgehend konstante Intensität wird im Zentrum eine hohe Abtragungsrate erreicht, während der glocken- bzw. gaußförmige Abfall der Intensität zu den Randbereichen hin den Übergang zum nächsten Spot insofern vorteilhaft herstellt, als eine stufenförmige Struktur in der Übergangszone vermieden wird.

Alternativ hierzu kann vorgesehen sein, daß die optische Einrichtung mindestens ein optisches Element beinhaltet, das zur Erzeugung unterschiedlicher Intensitätsverteilungen in unterschiedlichen Querschnittsrichtungen durch den Laserstrahl vorgesehen ist. So ist es denkbar, daß das optische Element so ausgebildet ist, daß in zwei aufeinander senkrecht stehenden Schnitten durch den Laserstrahl in einem Schnitt eine zumindest angenähert gaußförmige Intensitätsverteilung und im zweiten Schnitt eine zumindest angenähert homogene Intensitätsverteilung erzielt wird. Vorteilhaft sollten die Ablenkrichtung des Laserstrahles und der Querschnitt mit der homogenen Intensitätsverteilung senkrecht zueinander ausgerichtet sein.

In einer sehr vorteilhaften Ausgestaltung der Erfindung kann vorgesehen sein, daß die optische Einrichtung mehrere optische Elemente umfaßt, die gleichzeitig oder zeitlich nacheinander in den Laserstrahl einbringbar sind. Daraus ergibt sich der Vorteil, daß die Intensitätsverteilung innerhalb des Strahlenganges während der Behandlung, d.h. während des Materialabtrages von der Oberfläche oder auch in kurzen Behandlungspausen verändert werden kann, so daß die Strahlform und/oder die Intensitätsverteilung den jeweiligen Erfordernissen angeglichen werden kann, die sich während der Bearbeitung unterschiedlich ergeben.

In diesem Zusammenhang kann vorteilhaft vorgesehen sein, daß die optischen Elemente gemeinsam auf einem beweglichen Träger angeordnet sind und mit der Bewegung des Trägers deren Einbringen in den Strahlengang bzw. deren Entfernen aus dem Strahlengang ausführbar ist. Damit ist ein unkompliziertes Austauschen möglich, wobei als gemeinsamer Träger ein drehbares Wechselrad vorgesehen sein kann, das um eine parallel zu Strahlungsrichtung ausgerichtete Drehachse drehbar gelagert ist und an dem die optischen Elemente auf einem Teilkreis angeordnet sind. Damit kann durch eine Verdrehung des Wechselrades um einen Drehwinkel, der dem Bogenabstand zweier optischer Elemente auf dem Teilkreis entspricht, leicht das Auswechseln zweier Elemente im Strahlengang bewerkstelligt werden.

In der Regel ist im Strahlengang der Laserstrahlung ein Objektiv vorgesehen, mit dem die Größe der Spotfläche festgelegt wird. In einer bevorzugten Ausgestaltung der Erfindung ist vorgesehen, daß im Strahlengang der Laserstrahlung ein optisches Variosystem zur Änderung der Größe der auf die Objektoberfläche gerichteten Spotfläche vorgesehen ist. Damit lassen sich Spots verschiedener Größe während der Bearbeitung realisieren, so daß beispielsweise zunächst eine Grobabrasterung der Oberfläche mit großen Spot und nach entsprechender Änderung der Einstellung des Variosystems eine Feinbearbeitung mit kleineren Spots erfolgen kann. Denkbar ist auch, eine abschließende Bearbeitung im Sinne einer Glättung der Gesamtoberfläche mit einem sehr großen, über die gesamte zu bearbeitende Fläche ausgedehnten Spot vorzunehmen. Vorteilhaft sollten die Größe der auf die Objektoberfläche gerichteten Spotfläche, der Ablenkwinkel für den Laserstrahl zwischen zwei aufeinander folgenden Pulsen und die Pulsfrequenz der Laserstrahlung so aufeinander abgestimmt sein, daß die nebeneinander auf die Objektoberfläche gesetzten Spots sich um etwa 30% überdecken. Damit wird bereits eine verhältnismäßig glatte Oberfläche erzielt, die keine stufenförmigen Erhebungen aufweist.

Insofern besteht eine sehr bevorzugte Ausgestaltung der Erfindung darin, daß das Variosystem und/oder das Wechselrad mit elektronisch steuerbaren Stellantrieben versehen sind, deren Ansteuereingänge wie auch der Ansteueeingang der Ablenkeinrichtung für den Laserstrahl mit Ausgängen einer Ansteuereinheit verbunden sind, wobei an den Ausgängen der Ansteuereinheit Vorgabedaten für die Größe der Spotfläche und/oder für die Drehbewegung des Wechselrades und/oder für den Ablenkwinkel der Laserstrahlung zwischen zwei Pulsen bzw. dem Abstand zwischen zwei Spotflächen anliegen.

Damit ist es vorteilhaft möglich, jeweils von der Ansteuereinheit aus die einzelnen für die Abtragungsgeschwindigkeit bzw. für die Qualität der zu erzielenden Oberfläche bedeutsamen Vorgaben während der Bearbeitung oder innerhalb kurzer Bearbeitungspausen unkompliziert verändern zu können. Die Änderung der Vorgaben kann dabei in Abhängigkeit von der erreichten Qualität der Oberfläche vorgenommen werden.

Insbesondere zur Bearbeitung der Hornhaut des Auges kann die erfindungsgemäße Vorrichtung mit einer Einrichtung zur Erfassung von Istwerten der Krümmung einzelner Oberflächenabschnitte und/oder der gesamten zu bearbeitenden Oberfläche ausgestattet sein, die mit einem Istwertspeicher gekoppelt ist. Damit ist es möglich, Zwischenergebnisse qualitativ genau zu erfassen und daraus Schlußfolgerungen für die weitere Bearbeitung zu ziehen. Weiterhin kann die Ansteuereinheit eingangsseitig mit dem Istwertspeicher verbunden und in der Ansteuereinheit eine Rechenschaltung vorgesehen sein, zur Ermittlung von Vorgabedaten für die Größe der Spotfläche und/oder für die Drehbewegung des Wechselrades und/oder für den Ablenkwinkel des Laserstrahles aus dem Vergleich der Istwerte mit den Sollwerten dient, die beispielsweise über eine separate Schnittstelle eingegeben werden.

Die Erfindung bezieht sich weiterhin auf ein Verfahren zur Formgebung von Objekten durch Materialabtrag von der Objektoberfläche mit Hilfe eines gepulsten Laserstrahles, der über die Objektoberfläche geführt wird, bei dem während der Formgebung die Verteilung der Strahlungsintensität innerhalb des Laserstrahles, die Größe der Spotfläche, mit welcher der Laserstrahl auf die Objektoberfläche trifft oder der Ablenkwinkel für den Laserstrahl mittels einer diffraktiven und/oder refraktiven mikrooptisch wirksamen Struktur verändert werden.

Eine vorteilhafte Ausgestaltung dieses Verfahrens sieht vor, daß zu Beginn der Formgebung der Materialabtrag mit kleiner Spotfläche und zum Ende der Formgebung der Materialabtrag mit zunehmend größerer Spotfläche erfolgt. Dabei kann vorgesehen sein, daß in der Schlußphase der Formgebung der Materialabtrag mit einer Spotfläche erfolgt, deren Größe der Gesamtgröße der zu bearbeitenden Objektoberfläche entspricht.

Weiterhin ist es vorteilhaft, wenn zu Beginn der Formgebung der Materialabtrag mit topfförmig verteilter Intensität und zum Ende der Formgebung der Materialabtrag mit zunehmend gaußförmig verteilter Intensität erfolgt.

Im Rahmen der Erfindung liegt auch ein Verfahren zur Ermittlung von geometrischen Veränderungen an der Oberfläche von Objekten beim Betreiben einer Vorrichtung gemäß der vorhergehenden Beschreibung, bei dem vor, während und/oder unmittelbar nach einem Materialabtrag eine Krümmungsmessung einzelner Oberflächenabschnitte und/oder der gesamten zu bearbeitenden Oberfläche vorgenommen wird. Damit ist es vorteilhaft möglich, das Ergebnis der Arbeit mit der vorgenannten Vorrichtung bzw. das Ergebnis der Materialabtragung von einer Objektoberfläche zu bewerten. Das ist insbesondere vorteilhaft bei der Anwendung dieser Vorrichtung und ihrer Ausgestaltungen zum Zweck der Bearbeitung der Cornea des menschlichen Auges.

Das erfindungsgemäße Verfahren kann derart ausgestaltet sein, daß zum Zweck der Krümmungsmessung ein Meßstrahlengang oder mehrere Meßstrahlengänge auf die Oberfläche des Objektes gerichtet werden, die die Reflexionen dieser Meßstrahlengänge mittels einer Detektoreinrichtung erfaßt und daraus mittels einer Auswerteeinrichtung Krümmungswerte ermittelt werden. Die Meßstrahlengänge sollten dabei eine Intensität und eine Wellenlänge aufweisen, die im Gegensatz zum Bearbeitungsstrahlengang keine Veränderungen an der Oberfläche des Objektes bewirken. Derartige Ausgestaltungen, oftmals auch als Topographiesysteme bezeichnet, sind bekannt und sollen deshalb hier nicht weiter ausgeführt werden.

Eine weitere Ausgestaltung des erfindungsgemäßen Verfahren sieht vor, daß die ermittelten Krümmungswerte für die gesamte Oberfläche oder für einzelne Oberflächenabschnitte als Istwerte einem Vergleich mit Sollwerten zugrundegelegt werden. Damit ist es möglich, ausgehend vom aktuellen Bearbeitungsstand beim Materialabtrag unmittelbare Schlußfolgerungen für die Erreichung des Bearbeitungszieles zu ziehen. Diesbezüglich kann das erfindungsgemäße Verfahren weiterhin derart ausgestaltet sein, daß aus dem Vergleich der Istwerte mit Sollwerten der Oberflächengestalt Vorgabedaten für einen nachfolgenden, zeitlich begrenzten Materialabtrag gewonnen werden, wobei mit den Vorgabedaten der Ablenkwinkel der Laserstrahlung zwischen zwei aufeinanderfolgenden Impulsen und/oder die Größe der Spotfläche auf der Objektoberfläche und/oder der Austausch eines optischen Elementes im Strahlengang durch Drehbewegung des Wechselrades vorgegeben wird.

### Kurze Beschreibung der Zeichnungen

Die erfindungsgemäße Vorrichtung und das erfindungsgemäße Verfahren sollen nachfolgend anhand eines Ausführungsbeispieles näher erläutert werden. In den zugehörigen Zeichnungen zeigen:
- Fig.1: eine prinzipielle Darstellung des optischen Systems der Vorrichtung
- Fig.2: ein Wechselrad für die optischen Elemente
- Fig.3: ein Blockschaltbild mit der Verknüpfung der einzelnen Baugruppen
- Fig.4: gaußförmige Intensitätsverteilung im Strahlquerschnitt
- Fig.5: Intensitätsverteilung mit etwa gleicher Intensität in einer zentralen Querschnittsfläche und glocken- oder gaußförmig abfallende Intensität von der zentralen Querschnittsfläche zu den Randbereichen
- Fig.6: gaußförmige Intensitätsverteilung im Strahlquerschnitt in Scannrichtung
- Fig.7: etwa gleichförmige Intensität im Strahlquerschnitt senkrecht zur Scannrichtung

### Ausführliche Beschreibung der Zeichnungen

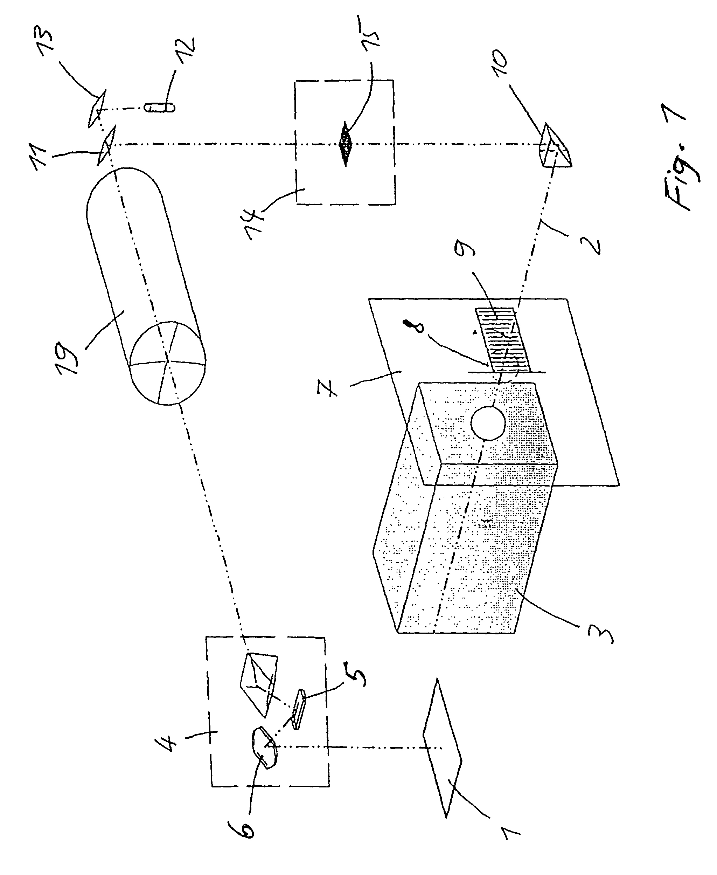

In Fig.1 ist eine Vorrichtung zur Formung eines Objektes 1 mit Hilfe eines gepulsten Laserstrahles 2, der von einem Excimerlaser 3 ausgeht, vorgesehen. Der Laserstrahl 2 wird mittels einer Ablenkeinrichtung 4, in der ein X-Scannerspiegel 5 und ein Y-Scannerspiegel 6 vorgesehen sind, über die Oberfläche des Objektes 1 geführt. Mit dem Energieeintrag in die Oberfläche des Objektes 1 durch den Laserstrahl 2 wird eine Ablation des Materials bewirkt. Das Objekt 1 kann beispielhaft ein menschliches Auge sein, dessen Cornea durch ophthalmologisches Formen bearbeitet wird, um Fehlsichtigkeit auszugleichen. Es ist aber die Anwendung der erfindungsgemäßen Vorrichtung beispielsweise auch zur Formung von künstlichen Linsen möglich, die zur Korrektur von Fehlsichtigkeit vorgesehen sind.

Der vom Excimerlaser 3 ausgehende Laserstrahl 2 wird durch eine Containmentwand 7 mit Fenster 8 hindurchgeführt und erreicht über einen variablen Abschwächer 9, ein Umlenkprisma 10, einen optischen Teiler 11 und über die Ablenkeinrichtung 4 die Oberfläche des Objektes 1.

Zum Zweck der visuellen Beobachtung des Zielgebietes auf der Oberfläche des Objektes 1 wird ein von einer Laserdiode 12 ausgehender Zielstrahl mit einer Wellenlänge 635nm über einen Umlenkspiegel 13 und den optischen Teiler 11 in den Laserstrahl 2 eingekoppelt.

Der vom Excimerlaser 3 ausgehende Laserstrahl 2 besitzt einen rechteckigen Querschnitt. Typischerweise ist die Strahlungsintensität innerhalb dieses rechteckigen Querschnittes nicht homogen verteilt. Während das Intensitätsprofil in Richtung der längeren Seite des Rechteckes etwa trapezartig mit Intensitätsschwankungen ausgebildet ist, weist das Intensitätsprofil in Richtung der kurzen Rechteckseite eine etwa Gauß- bzw. Glockenform auf.

Um die Verteilung der Strahlungsintensität innerhalb des Laserstrahles 2 nun so zu beeinflussen, daß eine optimale Abtragung von Material von der Objektoberfläche erfolgen kann, ist erfindungsgemäß im Laserstrahlengang eine optische Einrichtung 14 zur Beeinflussung der Intensitätsverteilung innerhalb des Strahlungsquerschnittes vorgesehen, und zwar in der Weise, daß die Intensität nach Durchgang durch die optische Einrichtung 14 nicht mehr nur in einer Schnittrichtung durch den Laserstrahl 2 eine glocken- oder gaußförmige oder glocken- oder gaußformähnliche Verteilung aufweist, sondern in mehreren Schnittrichtungen.

Beispielhaft befindet sich in der optischen Einrichtung 14 ein optisches Element 15 im Strahlengang, auf dem eine optisch wirksame Fläche mit einer diffraktiven mikrooptischen Struktur ausgebildet ist, die beim Durchgang des Laserstrahles 2 eine Beeinflussung der Intensitätsverteilung im dargestellten Sinne bewirkt.

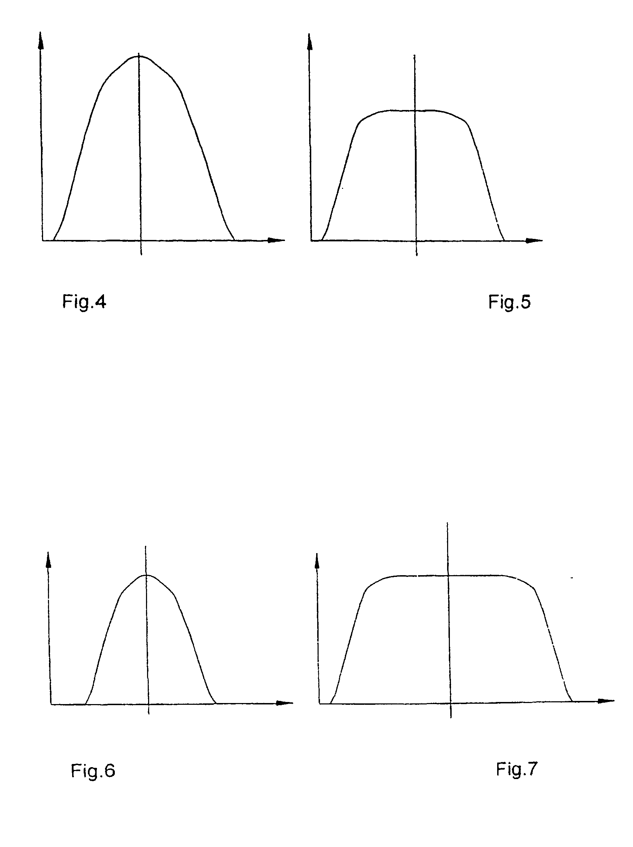

Je nach Gestaltung der mikrooptischen Struktur kann beispielsweise nach Durchgang durch das optisches Element 15 eine radialsymmetrische Intensitätsverteilung innerhalb des Strahlquerschnittes vorhanden sein, bei der lediglich im Zentrum des Strahlquerschnittes ein Intensitätsmaximum und vom Zentrum zu den Randbereichen hin eine glocken- oder gaußförmig abfallende Intensität vorhanden ist (vgl. Fig.4). Der Querschnitt des Laserstrahles ist nun weitestgehend kreisrund. Alternativ hierzu kann beispielsweise ein optisches Element 15 mit einer Struktur vorgesehen sein, durch welche ebenfalls eine radialsymmetrische Intensitätsverteilung erreicht wird, bei der jedoch in einem flächig ausgedehnten zentralen Querschnittsbereich der Laserstrahlung eine etwa homogene Intensitätsverteilung und von diesem zentralen Bereich zu den Randbereichen der Laserstrahlung hin eine glocken- oder gaußförmig abfallende Intensität vorhanden ist (vgl.Fig.5).

In unterschiedlichen Bearbeitungsstadien der Oberfläche des Objektes 1 kann es, um eine optimale Materialabtragung zu gewährleisten, vor Weiterbearbeitung erforderlich sein, die Intensitätsverteilungen im Laserstrahl 2 zu verändern. Um das ermöglichen zu können, ist erfindungsgemäß vorgesehen, daß die optische Einrichtung 14 mehrere verschiedene optische Elemente 15 umschließt, die wahlweise in den Strahlengang eingebracht werden können.

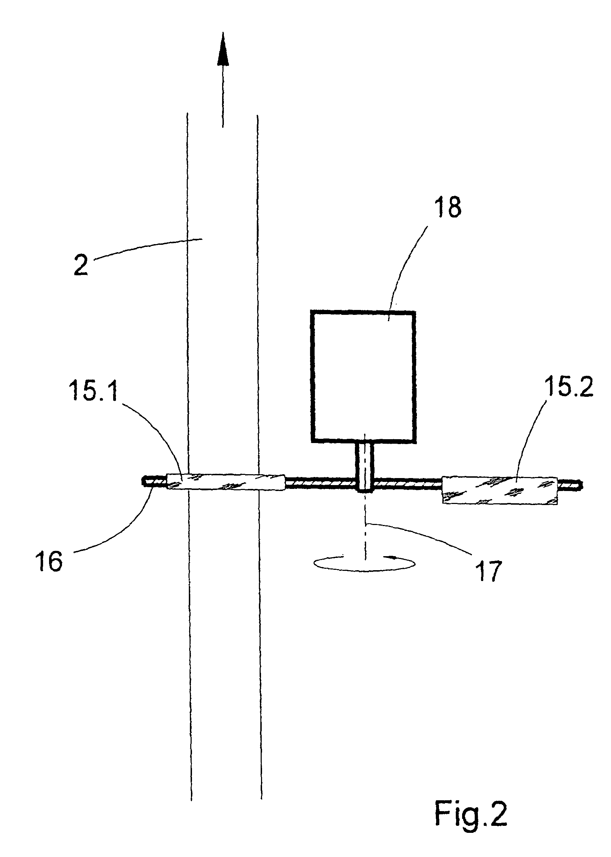

Wie in Fig.2 dargestellt, sind zu diesem Zweck zwei optische Elemente 15.1 und 15.2 auf einem Wechselrad 16 angeordnet. Das Wechselrad 16 ist um eine Drehachse 17, die parallel zur Strahlungsrichtung der Laserstrahlung 2 ausgerichtet ist, drehbar angeordnet und mit einem elektromechanischen Antrieb 18 gekoppelt. Beispielhaft kann das optische Element 15.1 mit einer mikrooptischen Struktur versehen sein, die wie oben beschrieben in einem Zentralbereich des Strahlenganges eine homogene Intensitätsverteilung und erst zu den Randbereichen hin eine glockenförmig abfallende Intensitätsverteilung erzeugt, während das optische Element 15.2 mit einer mikrooptischen Struktur versehen ist, die bereits unmittelbar vom Zentrum ausgehend zu den Randbereichen hin nach allen Richtungen eine gauß- bzw. glockenförmig abfallende Intensität erzeugt.

Alternativ hierzu kann stelbstverständlich vorgesehen sein, daß weitere optische Elemente 15.1, 15.2 ... 15.n auf dem Wechselrad 16 angeordnet sind. So kann beispielsweise das optische Element 15.n eine Struktur aufweisen, durch die der Strahlquerschnitt der Laserstrahlung zwar seine Rechteckform behält, die Ausdehnung der Querschnittsfläche jedoch reduziert wird und dabei im Schnitt entlang der längeren Seite des Rechteckes die Intensitätsverteilung weiter homogenisiert wird, während im Schnitt entlang der kürzeren Seite dieses rechteckigen Querschnittes die Strahlungsintensität der gaußförmigen Verteilung weiter angenähert wird. In Fig.6 und Fig.7 sind die Intensitätsverteilungen innerhalb eines Strahlenganges in zwei senkrecht zueinander angeordneten Schnittverläufen dargestellt. Demgemäß zeigt Fig.6 die homogenisierte Intensitätsverteilung in einer ersten dieser beiden Querschnittsrichtungen, Fig.7 die gaußförmige Verteilung der zweiten, senkrecht zur ersten orientierten Querschnittsrichtung. Die Querschnittsrichtung mit der gaußförmigen Verteilung gemäß Fig.7 sollte vorteilhafterweise mit der Ablenkrichtung des Laserstrahles gleich gerichtet sein.

Je nach Bedarf kann wahlweise eines dieser optischen Elemente 15.1, 15.2 ... 15.n in den Strahlengang eingebracht werden, indem an den Antrieb 18 ein Ansteuerimpuls ausgegeben und der Antrieb 18 dadurch veranlaßt wird, das Wechselrad 16 um einen Drehwinkel um die Drehachse 17 zu bewegen, der dem Bogenabstand zum gewünschten optischen Element auf dem Wechselrad 16 entspricht.

Im Strahlengang des Laserstrahles 2 der hier beschriebenen Vorrichtung ist weiterhin ein Objektiv vorgesehen, das beispielhaft ein Varioobjektiv 19 sein kann. Mit dem Objektiv wird die Spotgröße vorgegeben. Bei Verwendung eines Varioobjektivs 19 ist es möglich ist, die Größe der auf die Objektoberfläche gerichteten Spots zu variieren. Damit wird vorteilhaft erreicht, daß je nach Bearbeitungsstadium die Spotgröße so wählbar ist, daß entweder eine Feinbearbeitung über die gesamte zu bearbeitende Oberfläche, sofern der Spot auf diese Größe eingestellt wird, oder auch eine Intensivbearbeitung einzelner kleiner Oberflächenabschnitte vorgenommen werden kann, sofern die Spotgröße auf eine geringere Ausdehnung reduziert wird.

Mit der erfindungsgemäßen Vorrichtung ist es nunmehr möglich, sowohl das Intensitätsprofil innerhalb des Strahlungsquerschnittes, die Größe des Laserspots auf der zu bearbeitenden Fläche und auch den Ablenkwinkel zu variieren. Durch Abstimmung dieser drei Parameter aufeinander ist im weitestgehenden Sinne eine effektive Bearbeitung der Objektoberfläche in allen denkbaren Bearbeitungsstadien möglich.

Damit während der Bearbeitung oder unmittelbar nach der Bearbeitung einzelner Oberflächenabschnitte eine Veränderung des Ablenkwinkels, der Spotgröße oder auch der Intensitätsverteilung auf unkomplizierte Weise vorgenommen werden kann, ist ebenso wie die das Wechselrad 16 auch das Varioobjektiv 19 mit einem ansteuerbaren elektromechanischen Antrieb gekoppelt.

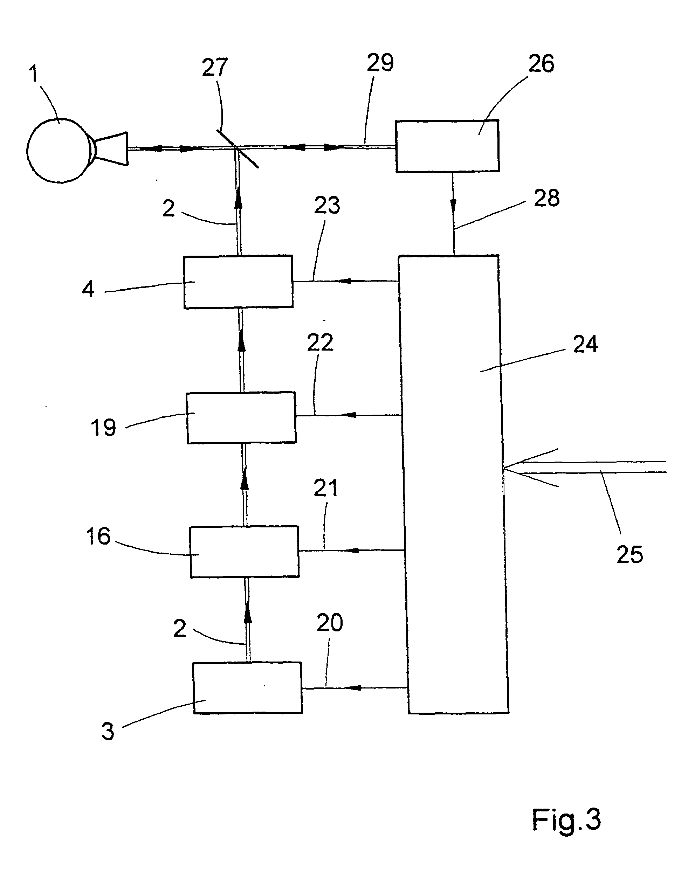

Wie in Fig.3 symbolisch dargestellt, sind in die von dem Excimerlaser 3 ausgehende Laserstrahl 2 das Wechselrad 16, das Varioobjektiv 19 und die Ablenkeinrichtung 4 eingeordnet. Dabei sind der Excimerlaser 3 über einen Ansteuereingang 20, das Wechselrad 16 über einen Ansteuereingang 21, das Varioobjektiv 19 über einen Ansteuereingang 22 und die Ablenkeinrichtung 4 über einen Ansteuereingang 23 mit einer Ansteuereinheit 24 verbunden.

Die Ansteuereinheit 24 ist mit einer Schnittstelle 25 versehen, über die Stellwerte für die Parameter Spotgröße, Ablenkwinkel und Intensitätsverteilung manuell eingegeben werden können. Beispielsweise wird je nach gewünschter Intensitätsverteilung ein Stellwert für die entsprechende Weiterschaltung des Wechselrades 16 eingegeben, um ein diesem Stellwert zugeordnetes optisches Elemente 15.1 bis 15.n in den Laserstrahlengang einbringen zu können. Analog werden Stellwerte für die Einstellung des Varioobjektivs eingegeben, die bestimmten Spotgrößen entsprechen.

Außerdem ist, einer Ausgestaltungsvariante der Erfindung entsprechend, nach Fig.3 eine Einrichtung 26 zur Erfassung von Istwerten der Krümmung einzelner Oberflächenabschnitte oder auch der gesamten zu bearbeitenden Oberfläche des Objektes 1 vorgesehen. Die Einrichtung 26 ist dabei so ausgebildet, daß vor, während oder nach der Bearbeitung durch topografische Messungen Krümmungswerte der Oberfläche ermittelt werden. Die dazu erforderliche Meßstrahlung 29 wird auf dem Weg zum Objekt 1 über einen optischen Teiler 27 in den Laserstrahl 2 eingekoppelt, während das von der Objektoberfläche reflektierte Licht mit der Information über die Krümmung der Oberfläche ebenfalls mittels des optischen Teilers 27 wieder aus dem Laserstrahl 2 ausgekoppelt und beispielsweise auf eine Detektoreinrichtung innerhalb der Einrichtung 26 gerichtet wird.

Die ermittelten Krümmungswerte werden über einen Signalweg 28 an die Ansteuereinheit 24 übergeben, in der eine Rechenschaltung (nicht separat dargestellt) enthalten ist, die aus einem Vergleich mit den über die Schnittstelle 25 eingegebenen Sollwerten für die einzelnen Parameter (Ablenkwinkel, Spotgröße, Intensitätsverteilung) und den ermittelten Istwerten für die Oberflächenkrümmungen Vorgabedaten für die weitere Bearbeitung der Oberfläche des Objektes 1 ermittelt und über die Ansteuereingänge 20 bis 23 ausgibt.

Mit der hier beispielhaft beschriebenen Vorrichtung ist vorteilhaft das erfindungsgemäße Verfahren zur Formgebung von Objekten durch Materialabtrag von der Objektoberfläche mit Hilfe eines gepulsten Laserstrahles wie auch das Verfahren zur Ermittlung von geometrischen Veränderungen an der Oberfläche von Objekten bei Betreiben dieser Vorrichtung ausführbar.

Ein wesentlicher Vorteil besteht wie bereits dargestellt darin, daß nach der Bearbeitung einzelner Oberflächenabschnitte durch entsprechende Vorgabe der Spotgröße und der Intensitätsverteilung innerhalb der Laserstrahlung eine weitere Glättung der Hornhautwölbung möglich ist. Auch läßt sich durch die Möglichkeit dieser ganzflächigen Ablation eine Verkürzung der Bearbeitungszeit erreichen. So lassen sich neben der Korrektur von Myopie und Hyperopie am menschlichen Auge vorzugsweise auch Unregelmäßigkeiten. wie zum Beispiel irregulärer Astigmatismus, korrigieren.

Es hat sich auch gezeigt, daß auf diese Weise die Ausbildung sogenannter Central Islands vermieden werden kann, die bisher bei Verfahrensweisen und Vorrichtungen nach dem Stand der Technik störend aufgetreten sind.

Bei der Benutzung der erfindungsgemäßen Vorrichtung empfiehlt es sich, zunächst eine flächenhafte Ablation nach dem Spotscanning-Prinzip mit Spots vorzunehmen, deren Ausdehnungen kleiner als die gesamte zu bearbeitende Oberfläche sind, wobei eine glocken- bzw. gaußförmige Intensitätsverteilung im Laserstrahl 2 gewählt werden sollte. In einem nächsten Schritt sollte die Ablation der zu behandelnden Oberfläche mit Spots erfolgen, deren Größe im Bereich der Größe der zu bearbeitenden Oberfläche liegt und deren Zentren auf das Zentrum der zu bearbeitenden Oberfläche gerichtet sind, wobei eine Intensitätsverteilung innerhalb der Strahlung zu wählen ist, bei der in einem Zentralbereich des Strahlenganges eine homogene Intensität, zu den Randbereichen hin allseitig eine gaußförmig abfallende Intensität vorhanden ist.

In einer alternativen Verfahrensweise kann in einem ersten Schritt die Änderung der zu bearbeitenden Oberfläche bzw. des zu bearbeitenden Oberflächenabschnittes nach einem vorangegangenen Bearbeitungszyklus bestimmt werden, wozu die Einrichtung 26 zur Ermittlung von Krümmungswerten zu benutzen ist. In einem weiteren Schritt werden mittels der Recheneinheit innerhalb der Ansteuereinheit 24 in Abhängigkeit von den ermittelten Krümmungswerten Intensitätsverteilungen, Ablenkwinkel und Spotgrößen für den nächstfolgenden Bearbeitungsschritt festgelegt, über die Ansteuereingänge 20 bis 23 an die betreffenden Baugruppen ausgegeben, mit Hilfe des von der Laserdiode 12 ausgehenden Zielstrahles unter visueller Kontrolle die Zielposition angefahren und schließlich der Excimerlaser 3 in Betrieb genommen. Nach einer zeitlich begrenzten Bearbeitungsdauer kann dann wiederum im Sinne des ersten Schrittes die Änderung der zu bearbeitenden Oberfläche bestimmt werden und daraus Schlußfolgerungen für die weitere Bearbeitungsweise abgeleitet werden.

So kann vorteilhaft das Vorhandensein von ausgeprägten Auswölbungen auf der Oberfläche des Objektes 1 festgestellt und zu deren effektiver Korrektur eine andere Intensitätsverteilung innerhalb des Strahlenganges für den nächsten Bearbeitungsgang gewählt werden als bei einer normalen Korrektur einer Myopie. Die Einsatzmöglichkeit von großen und kleinen Spots, bei denen in der Laserstrahlung gaußförmig oder auch topfartig ausgebildete Intensitätsverteilungen gewählt werden können, oder bei denen in einem Zentralbereich eine konstante Intensitätsverteilung zu verzeichnen ist, eröffnet Kombinationsvarianten, mit denen selbst extreme Oberflächenstrukturen optimal korrigiert bzw. neu aufgebaut werden können, ohne daß visuell wahrnehmbare und dadurch störende Unebenheiten auf der Objektoberfläche zurückbleiben.

## Patentansprüche

1. Vorrichtung zur Formgebung von Objekten durch Materialabtrag von der Objektoberfläche, mit einem gepulsten Laserstrahl und einer Ablenkeinrichtung, durch die der Laserstrahl über die Objektoberfläche geführt wird, **dadurch gekennzeichnet, daß** eine optische Einrichtung (14) zur Änderung der Verteilung der Strahlungsintensität innerhalb des Laserstrahlquerschnittes vorgesehen ist, die mindestens ein optisches Element (15) mit einer diffraktiven und/oder refraktiven mikrooptisch wirksamen Struktur aufweist, wobei diese Struktur die Intensitätsverteilung im Laserstrahlquerschnitt derart beeinflußt, daß der Laserstrahl (2) nach Durchgang durch das optische Element (15) in mindestens einer Querschnittsrichtung eine glocken- oder gaußförmige oder glocken- oder gaußformähnliche Intensitätsverteilung aufweist.

2. Vorrichtung nach Anspruch 1, **dadurch gekennzeichnet, daß** das mindestens eine optische Element (15) durch weitere optische Elemente (15.1, 15.2, ... 15.n) ausgewechselt werden kann.

3. Vorrichtung nach Anspruch 2, **dadurch gekennzeichnet, daß** ein optisches Element (15) vorgesehen ist, das eine radialsymmetrische Intensitätsverteilung innerhalb des Laserstrahlquerschnittes erzeugt, bei der in einer kreisrunden zentralen Querschnittsfläche eine etwa gleiche Intensität und von der zentralen Querschnittsfläche zu den Randbereichen der Laserstrahlung hin eine glocken- oder gaußförmig abfallende Intensität vorhanden ist.

4. Vorrichtung nach Anspruch 2, **dadurch gekennzeichnet, daß** ein optisches Element (15) vorgesehen ist, das eine radialsymmetrische Intensitätsverteilung innerhalb des Laserstrahlquerschnittes erzeugt, bei der im Zentrum des Querschnittes ein Intensitätsmaximum und vom Zentrum zu den Randbereichen hin eine glocken- oder gaußförmig abfallende Intensität vorhanden ist.

5. Vorrichtung nach Anspruch 2, **dadurch gekennzeichnet, daß** ein optisches Element (15) vorgesehen ist, das zur Erzeugung unterschiedlicher Intensitätsverteilungen in unterschiedlichen Querschnittsrichtungen durch den Laserstrahl vorgesehen ist.

6. Vorrichtung nach Anspruch 5, **dadurch gekennzeichnet, daß** das optische Element (15) so ausgebildet ist, daß in zwei aufeinander senkrecht stehenden Schnitten durch den Laserstrahl (2) in einem Schnitt eine zumindest angenähert gaußförmige Intensitätsverteilung und im zweiten Schnitt eine zumindest angenähert homogene Intensitätsverteilung erzielt wird, wobei die Ablenkrichtung des Laserstrahles senkrecht zur homogenen Intensitätsverteilung ausgerichtet ist.

7. Vorrichtung nach einem der vorgenannten Ansprüche, **dadurch gekennzeichnet, daß** die optische Einrichtung (14) mehrere auf einem beweglichen Träger angeordnete optische Elemente (15) umfaßt, wobei mit der Bewegung des Trägers das Einbringen der optischen Elemente (15) in den Laserstrahl (2) bzw. deren Entfernen aus dem Laserstrahl (2) ausführbar ist.

8. Vorrichtung nach Anspruch 7, **dadurch gekennzeichnet, daß** der bewegliche Träger als drehbares Wechselrad (16) ausgebildet ist, das um eine parallel zur Strahlungsrichtung ausgerichtete Drehachse (17) drehbar gelagert ist und an dem die optischen Elemente (15) auf einem Teilkreis angeordnet sind.

9. Vorrichtung nach einem der vorgenannten Ansprüche, **dadurch gekennzeichnet, daß** im Laserstrahlengang ein optisches Variosystem zur Beeinflussung der Größe der auf die Objektoberfläche gerichteten Spotfläche vorgesehen ist.

10. Vorrichtung nach Anspruch 9, **dadurch gekennzeichnet, daß** die Größe der Spotfläche in Bezug auf den Ablenkwinkel der Laserstrahlung zwischen zwei aufeinander folgenden Pulsen und auf die Pulsfrequenz der Laserstrahlung so abgestimmt ist, daß die einzelnen Spotflächen sich auf der Objektoberfläche um etwa 30 % überdecken.

11. Vorrichtung nach Anspruch 10, **dadurch gekennzeichnet, daß** das Variosystem und/oder das Wechselrad (16) mit elektronisch steuerbaren Stellantrieben versehen sind, deren Ansteuereingänge (21,22) wie auch ein Ansteuereingang (23) der Ablenkeinrichtung (4) mit den Ausgängen einer Ansteuereinheit (24) verbunden sind, wobei an den Ausgängen der Ansteuereinheit (24) Vorgabedaten für die Größe der Spotfläche und/oder für die Drehbewegung des Wechselrades (16) und/oder für den Ablenkwinkel anliegen.

12. Vorrichtung nach Anspruch 11, **dadurch gekennzeichnet, daß** eine Einrichtung (26) zur Erfassung von Istwerten der Krümmung einzelner Oberflächenabschnitte und/oder der gesamten zu bearbeitenden Oberfläche vorgesehen und mit einem Istwert-Speicher verbunden ist.

13. Vorrichtung nach Anspruch 11 oder 12, **dadurch gekennzeichnet, daß** die Ansteuereinheit (24) eingangsseitig mit dem Istwert-Speicher und einem Sollwert-Speicher verbunden ist und in der Ansteuereinheit (24) eine Rechenschaltung zur Ermittlung von Vorgabedaten für die Größe der Spotfläche und/oder für die Drehbewegung des Wechselrades (16) und/oder für den Ablenkwinkel des Laserstrahles (2) aus dem Vergleich der Istwerte mit den Sollwerten vorgesehen ist.

14. Verfahren zur Formgebung von Objekten durch Materialabtrag von der Objektoberfläche mit Hilfe eines gepulsten Laserstrahles, der über die Objektoberfläche geführt wird, **dadurch gekennzeichnet, daß** während der Formgebung die Verteilung der Strahlungsintensität innerhalb des Laserstrahles (2), die Größe der Spotfläche, mit welcher der Laserstrahl (2) auf die Objektoberfläche trifft oder der Ablenkwinkel für den Laserstrahl (2) mittels einer diffraktiven und/oder refraktiven mikrooptisch wirksamen Struktur verändert werden.

15. Verfahren nach Anspruch 14, **dadurch gekennzeichnet, daß** zu Beginn der Formgebung der Materialabtrag mit kleiner Spotfläche und zum Ende der Formgebung der Materialabtrag mit zunehmend größerer Spotfläche erfolgt.

16. Verfahren nach Anspruch 14 oder 15, **dadurch gekennzeichnet, daß** in der Schlußphase der Formgebung der Materialabtrag mit einer Spotfläche erfolgt, deren Größe der Gesamtgröße der zu bearbeitenden Objektoberfläche entspricht.

17. Verfahren nach Anspruch 14 bis 16, **dadurch gekennzeichnet, daß** zu Beginn der Formgebung der Materialabtrag mit topfförmig verteilter Intensität und zum Ende der Formgebung der Materialabtrag mit zunehmend gaußförmig verteilter Intensität erfolgt.

18. Verfahren zur Ermittlung von geometrischen Veränderungen an der Oberfläche von Objekten beim Betreiben einer Vorrichtung gemäß den Ansprüchen 12 oder 13, **dadurch gekennzeichnet, daß** vor, während und/oder unmittelbar nach einem Materialabtrag eine Krümmungsmessung einzelner Oberflächenabschnitte und/oder der gesamten zu bearbeitenden Oberfläche vorgenommen wird.

19. Verfahren nach Anspruch 18, **dadurch gekennzeichnet, daß** zum Zweck der Krümmungsmessung ein Meßstrahlengang oder mehrere Meßstrahlengänge auf die Oberfläche des Objektes gerichtet, die Reflexionen dieser Meßstrahlengänge mittels einer Detektoreinrichtung erfaßt und daraus mittels einer Auswerteeinrichtung Krümmungswerte ermittelt werden.

20. Verfahren nach einem der Ansprüche 18 oder 19, **dadurch gekennzeichnet, daß** die ermittelten Krümmungswerte für die gesamte Oberfläche oder für einzelne Oberflächenabschnitte des zu bearbeitenden Objektes als Istwerte einem Vergleich mit Sollwerten für die gesamte Oberfläche oder einzelnen Oberflächenabschnitten zugrundegelegt werden.

21. Verfahren nach Anspruch 20, **dadurch gekennzeichnet, daß** aus dem Vergleich der Istwerte mit Sollwerten Vorgabedaten für einen nachfolgenden, zeitlich begrenzten Materialabtrag gewonnen werden, wobei mit den Vorgabedaten der Ablenkwinkel des Laserstrahles zwischen zwei aufeinander folgenden Pulsen und/oder die Größe der Spotfläche auf der Objektoberfläche und/oder die Intensitätsverteilung innerhalb des Laserstrahles (2) für den nachfolgenden Materialabtrag vorgegeben wird.

## Claims

1. Apparatus for shaping objects by the removal of material from the surface of the object with a pulsed laser beam and a deflecting device, by which the laser beam is passed over the surface of the object, **characterised in that** an optical device (14) is provided for altering the distribution of the radiation intensity within the cross-section of the beam, which has at least one optical element (15) with a diffractive and/or refractive, microoptically active structure, whereby this structure influences the intensity distribution within the cross-section of the laser beam such that, after passing through the optical element (15), the laser beam (2) has an intensity distribution in at least one cross-sectional direction which is bell-shaped or gaussian-shaped or is similar to bell-shaped or gaussian-shaped.

2. Apparatus as claimed in Claim 1, **characterised in that** the at least one optical element (15) can be replaced by further optical elements (15.1, 15.2, .... 15.n).

3. Apparatus as claimed in Claim 2, **characterised in that** an optical element (15) is provided, which produces a radially symmetrical intensity distribution within the cross-section of the laser beam, in which there is an approximately constant intensity in a circular central cross-sectional area and an intensity decreasing in a bell-shaped or gaussian-shaped manner from the central cross-sectional area to the edge regions of the laser beam.

4. Apparatus as claimed in Claim 2, **characterised in that** an optical element (15) is provided, which produces a radially symmetrical intensity distribution within the cross-section of the laser beam, in which there is a maximum intensity in the centre of the cross-section and an intensity which decreases in a bell-shaped or gaussian-shaped manner from the centre to the edge regions.

5. Apparatus as claimed in Claim 2, **characterised in that** an optical element (15) is provided, which is provided to produce different intensity distributions in different cross-sectional directions through the laser beam.

6. Apparatus as claimed in Claim 5, **characterised in that** the optical element (15) is so constructed that, in two mutually perpendicular sections through the laser beam (2), an at least approximately gaussian-shaped intensity distribution is produced in one section and an at least approximately homogeneous intensity distribution is produced in the second section, whereby the deflecting device of the laser beam is orientated perpendicular to the homogeneous intensity distribution.

7. Apparatus as claimed in one of the preceding claims, **characterised in that** the optical device (14) includes a plurality of optical elements (15) arranged on a movable carrier, whereby the introduction of the optical elements (15) into the laser beam (2) and their removal from the laser beam (2) may be performed with the movement of the carrier.

8. Apparatus as claimed in Claim 7, **characterised in that** the movable carrier is constructed in the form of a rotatable change-gear (16), which is rotatably mounted about a rotary axis (17) aligned parallel with the direction of the radiation and on which the optical elements (15) are arranged on a pitch circle.

9. Apparatus as claimed in one of the preceding claims, **characterised in that** an optical variation system is provided in the laser beam pathway for influencing the magnitude of the spot area directed onto the surface of the object.

10. Apparatus as claimed in Claim 9, **characterised in that** the size of the spot area is so matched to the deflection angle of the laser beam between two successive pulses and to the pulse frequency of the laser radiation that the individual spot areas on the surface of the object overlap by about 30%.

11. Apparatus as claimed in Claim 10, **characterised in that** the variation system and/or the change-speed gear (16) are provided with electronically controllable actuators, the control inputs (21, 22) of which and also one control input (23) of the deflecting device (14) are connected to the outputs of a control unit (24), whereby input data for the size of the spot area and/or for the rotary movement of the change-speed gear (16) and/or for the deflection angle is present at the outputs of the control unit (24).

12. Apparatus as claimed in Claim 11, **characterised in that** a device (26) is provided for detecting actual values of the curvature of individual surface sections and/or of the entire surface to be processed and is connected with an actual value store.

13. Apparatus as claimed in Claim 11 or 12, **characterised in that** the input of the control unit (24) is connected to the actual value store and a desired value store and a computing circuit is provided in the control unit (24) for determining input data for the size of the spot area and/or for the rotary movement of the change-speed gear (16) and/or for the deflecting angle of the laser beam (2) from the comparison of the actual values with the desired values.

14. A method of shaping objects by the removal of material from the surface of the object with the aid of a pulse laser beam, which is passed over the surface of the object, **characterised in that**, during the shaping, the distribution of the radiation intensity within the laser beam (2), the size of the spot area, with which the laser beam (2) impinges against the surface of the object or the deflection angle for the laser beam (2) is altered by means of a diffractive and/or refractive structure, which is microoptically active.

15. A method as claimed in Claim 14, **characterised in that** the removal of material is effected with a small spot area at the beginning of the shaping process and the removal of material is effected with an increasingly large spot area towards the end of the shaping process.

16. A method as claimed in Claim 14 or 15, **characterised in that** the removal of material is effected in the final phase of the shaping process with a spot area whose size corresponds to the total size of the surface of the object to be processed.

17. A method as claimed in Claims 14 to 16, **characterised in that** the removal of material is effected at the beginning of the shaping process with an intensity of cup-shaped distribution and the removal of material is effected with an intensity which is of increasingly gaussian-shaped distribution at the end of the shaping process.

18. A method of determining geometrical changes at the surface of objects when operating an apparatus in accordance with Claims 12 or 13, **characterised in that** before, during and/or directly after a material removing process, a curvature measurement of individual surface sections and/or of the entire surface to be processed is effected.

19. A method as claimed in Claim 18, **characterised in that**, for the purpose of the curvature measurement, a measuring beam or a plurality of measuring beams are directed onto the surface of the object, the reflections of these measuring beams are detected by means of a detector device and curvature values are determined therefrom by means of an evaluation device.

20. A method as claimed in one of Claims 18 or 19, **characterised in that** the determined curvature values for the entire surface or for individual surface sections of the object to be processed are used as actual values as the basis for a comparison with desired values for the entire surface or individual surface sections.

21. A method as claimed in Claim 20, **characterised in that** input data for a subsequent, time-limited removal of material is obtained from the comparison of the actual values with desired values, whereby the subsequent removal of material is predetermined with the input data of the deflection angle of the laser beam between two successive pulses and/or the size of the spot area on the surface of the object and/or the intensity distribution within the laser beam (2).

## Revendications

1. Dispositif de formage d'objets par enlèvement de matière de la surface de l'objet, avec un rayon laser pulsé et un dispositif de déflexion par lequel le rayon laser est guidé sur la surface de l'objet, **caractérisé en ce qu'**il est prévu un dispositif optique (14) pour modifier la distribution de l'intensité du rayonnement à l'intérieur de la section transversale du rayon laser, lequel comporte au moins un élément optique (15) avec une structure de diffraction et/ou de réfraction agissant de manière micro-optique, cette structure influençant la distribution de l'intensité dans la section transversale du rayon laser de manière que le rayon laser (2), après passage à travers l'élément optique (15), présente dans au moins une direction de la section transversale une distribution de l'intensité en forme de cloche ou de Gauss, ou une distribution similaire de l'intensité.

2. Dispositif selon la revendication 1, **caractérisé en ce que** le ou les éléments optiques (15) peuvent être échangés par d'autres éléments optiques (15.1, 15.2,...15.n).

3. Dispositif selon la revendication 2, **caractérisé en ce qu'**il est prévu un élément optique (15) qui produit une distribution symétrique radiale de l'intensité à l'intérieur de la section transversale du rayon laser, pour laquelle dans une surface centrale circulaire de la section transversale on a une intensité à peu près identique et, depuis la surface centrale de la section transversale vers les zones de bordure du rayonnement laser, une intensité décroissant en forme de cloche ou de Gauss.

4. Dispositif selon la revendication 2, **caractérisé en ce qu'**il est prévu un élément optique (15) qui produit une distribution symétrique radiale de l'intensité à l'intérieur de la section transversale du rayonnement laser, pour laquelle au centre de la section transversale on a un maximum d'intensité et, depuis le centre vers les zones de bordure, une intensité décroissant en forme de cloche ou de Gauss.

5. Dispositif selon la revendication 2, **caractérisé en ce qu'**il est prévu un élément optique (15) pour produire différentes distributions de l'intensité dans différentes directions de la section transversale à travers le rayon laser.

6. Dispositif selon la revendication 5, **caractérisé en ce que** l'élément optique (15) est réalisé de manière que dans deux coupes perpendiculaires l'une à l'autre à travers le rayon laser (12) on obtienne, dans une coupe, une distribution au moins approximativement de Gauss de l'intensité et, dans la deuxième coupe, une distribution au moins approximativement homogène de l'intensité, la direction de déflexion du rayon laser étant orientée perpendiculairement à la distribution homogène de l'intensité.

7. Dispositif selon l'une des revendications précédentes, **caractérisé en ce que** le dispositif optique (14) comprend plusieurs éléments optiques (15) disposés sur un support mobile, l'introduction des éléments optiques (15) dans le rayon laser (2) ou leur éloignement du rayon laser (2) pouvant être exécuté avec le mouvement du support.

8. Dispositif selon la revendication 7, **caractérisé en ce que** le support mobile est réalisé comme roue d'échange (16) tournante qui est montée de manière à pouvoir tourner autour d'un axe de rotation (17) orienté parallèlement à la direction du rayonnement, et sur lequel les éléments optiques (15) sont disposés sur un cercle partiel.

9. Dispositif selon l'une des revendications précédentes, **caractérisé en ce qu'**il est prévu dans le parcours du rayon laser un système de variation optique pour influencer la taille de la surface du spot dirigé vers la surface de l'objet.

10. Dispositif selon la revendication 9, **caractérisé en ce que** la taille de la surface du spot est adaptée à l'angle de déflexion du rayonnement laser entre deux pulsations successives et à la fréquence de pulsation du rayonnement laser, de manière que les différentes surfaces du spot se recouvrent sur environ 30% sur la surface de l'objet.

11. Dispositif selon la revendication 10, **caractérisé en ce que** le système de variation et/ou la roue d'échange (16) sont pourvus de mécanismes de réglage à commande électronique dont les entrées de commande (21, 22) ainsi qu'une entrée de commande (23) du dispositif de déflexion (4) sont reliées aux sorties d'une unité de commande (24), aux sorties de l'unité de commande (24) s'appliquant des données de sélection pour la taille de la surface du spot et/ou pour le mouvement de rotation de la roue d'échange (16) et/ou pour l'angle de déflexion.

12. Dispositif selon la revendication 11, **caractérisé en ce qu'**il est prévu un dispositif (26) pour enregistrer des valeurs réelles de la courbure de différentes parties de la surface et/ou de la surface globale à usiner, lequel dispositif est relié à une mémoire de valeurs réelles.

13. Dispositif selon la revendication 11 ou 12, **caractérisé en ce que** l'unité de commande (24) est reliée côté entrée à la mémoire de valeurs réelles et à une mémoire de valeurs de consigne et dans l'unité de commande (24) il est prévu un circuit de calcul pour déterminer des données de sélection de la taille de la surface du spot et/ou du mouvement de rotation de la roue d'échange (16) et/ou de l'angle de déflexion du rayon laser (2), à partir de la comparaison entre les valeurs réelles et les valeurs de consigne.

14. Procédé de formage d'objets par enlèvement de matière de la surface de l'objet à l'aide d'un rayon laser pulsé qui est guidé sur la surface de l'objet, **caractérisé en ce que** pendant le formage on modifie la distribution de l'intensité du rayonnement à l'intérieur du rayon laser (2), la taille de la surface du spot par lequel le rayon laser (2) parvient sur la surface de l'objet ou l'angle de déviation du rayon laser (2) au moyen d'une structure de diffraction et/ou de réfraction à action micro-optique.

15. Procédé selon la revendication 14, **caractérisé en ce qu'**au début du formage l'enlèvement de matière s'effectue avec une petite surface de spot et à la fin du formage l'enlèvement de matière s'effectue avec une surface de spot de plus en plus grande.

16. Procédé selon la revendication 14 ou 15, **caractérisé en ce qu'**au cours de la phase finale du formage l'enlèvement de matière s'effectue avec une surface de spot dont la taille correspond à la taille totale de la surface de l'objet à usiner.

17. Procédé selon les revendications 14 à 16, **caractérisé en ce qu'**au début du formage l'enlèvement de matière s'effectue avec une intensité répartie en forme de pot et à la fin du formage l'enlèvement de matière s'effectue avec une intensité répartie de plus en plus en forme de Gauss.

18. Procédé de détermination de variations géométriques à la surface d'objets pendant le fonctionnement d'un dispositif selon les revendications 12 ou 13, **caractérisé en ce qu'**avant, pendant et/ou immédiatement après un enlèvement de matière on procède à une mesure de la courbure de différentes parties de la surface et/ou de la totalité de la surface à usiner.

19. Procédé selon la revendication 18, **caractérisé en ce que** dans le but de mesurer la courbure on dirige un faisceau de rayons de mesure ou plusieurs faisceaux de rayons de mesure sur la surface de l'objet, on enregistre les réflexions de ces faisceaux de rayons de mesure au moyen d'un dispositif de détection et on détermine à partir de celles-ci des valeurs de la courbure au moyen d'une unité d'exploitation.

20. Procédé selon l'une des revendications 18 ou 19, **caractérisé en ce que** les valeurs déterminées de la courbure de toute la surface ou de différentes parties de la surface de l'objet à usiner sont prises pour base, en tant que valeurs réelles, d'une comparaison avec des valeurs de consigne pour toute la surface ou différentes parties de la surface.

21. Procédé selon la revendication 20, **caractérisé en ce qu'**à partir de la comparaison des valeurs réelles et des valeurs de consigne, on obtient des données de sélection pour un enlèvement de matière ultérieur, limité dans le temps, l'angle de déflexion du rayon laser entre deux pulsations successives et/ou la taille de la surface du spot sur la surface de l'objet et/ou la distribution de l'intensité à l'intérieur du rayon laser (2) étant prédéfinis avec les données de sélection pour l'enlèvement de matière suivant.
